# DEMANDE DE BREVET EUROPEEN

(11) **EP 1 987 983 A1**
(43) Date de publication de la demande: **05.11.2008**
(21) Numéro de dépôt: 08290252.9
(22) Date de dépôt: 17.03.2008
(51) Int. Cl.: B60N 2/58

(54) **Elément de garnissage de véhicule automobile comprenant un empiècement en cuir enduit**

(30) Priorité: 12.04.2007 FR 0702674
(71) Demandeur: Centre d'Etude et de Recherche pour l'Automobile (CERA), 51100 Reims (FR)
(72) Inventeur: Albacete, Joan Manel, 17458 Girona (ES); Bonfils, Xavier, 51100 Reims (FR); Nunez Flores, Antonio, 17412 Girona (ES)
(74) Mandataire: Sayettat, Julien Christian

(57) **Abrégé**

L'invention concerne un élément de garnissage de véhicule automobile, ledit élément comprenant une coiffe, le volume intérieur de ladite coiffe étant rempli par un corps en mousse, ladite coiffe comprenant au moins un empiècement à base de cuir, ledit empiècement comprenant une enduction d'envers présentant une affinité d'accrochage avec ladite mousse de sorte que ladite mousse surmoule ledit empiècement.

## Description

L'invention concerne un élément de garnissage de véhicule automobile et un procédé de réalisation d'un tel élément.

Il est connu de réaliser un élément de garnissage de véhicule automobile, tel qu'un appui-tête, un coussin d'assise/dossier ou un accoudoir, ledit élément comprenant une coiffe, le volume intérieur de ladite coiffe étant rempli par un corps en mousse, ladite coiffe comprenant au moins un empiècement à base de cuir, ledit corps surmoulant l'envers de ladite coiffe.

Afin d'assurer une bonne adhérence entre l'envers de l'empiècement et le corps en mousse, il est connu de disposer en envers du cuir une couche d'envers, notamment à base de mousse, par exemple par collage ou couture, ce qui entraîne des coûts importants et complexifie la confection de la coiffe, notamment lors des opérations de couture en raison de l'épaisseur importante du cuir pourvu de ladite couche d'envers.

L'invention a pour but de pallier ces inconvénients.

A cet effet, et selon un premier aspect, l'invention propose un élément de garnissage de véhicule automobile, ledit élément comprenant une coiffe, le volume intérieur de ladite coiffe étant rempli par un corps en mousse, ladite coiffe comprenant au moins un empiècement à base de cuir, ledit empiècement comprenant une enduction d'envers présentant une affinité d'accrochage avec ladite mousse de sorte que ladite mousse surmoule ledit empiècement.

Une telle enduction s'avère notamment économique et de faible épaisseur, ce qui facilite la confection de la coiffe.

Selon un deuxième aspect, l'invention propose un procédé de réalisation d'un tel élément.

D'autres particularités et avantages de l'invention apparaîtront dans la description qui suit.

On décrit à présent un élément de garnissage de véhicule automobile, ledit élément comprenant une coiffe, le volume intérieur de ladite coiffe étant rempli par un corps en mousse, ladite coiffe comprenant au moins un empiècement à base de cuir, ledit empiècement comprenant une enduction d'envers présentant une affinité d'accrochage avec ladite mousse de sorte que ladite mousse surmoule ledit empiècement par l'intermédiaire de ladite enduction.

Selon une réalisation, la mousse est à base de polyuréthanne et l'enduction est à base de polyuréthanne anionique aromatique.

Selon une réalisation, le polyuréthane anionique aromatique est à base de polyéther.

On peut utiliser par exemple une enduction à base de produits déjà utilisés lors des opérations de tannage du cuir.

Un de ces produits est par exemple la résine anionique LAMPUR® 1270 fournie par la société LAMBERTI®.

On décrit à présent un procédé de réalisation d'un élément comprenant les étapes de :
- prévoir au moins un format de cuir,
- enduire l'envers dudit format avec une enduction d'envers présentant une affinité d'accrochage avec une mousse, par exemple par pulvérisation au moyen d'une machine BARNINI®, de sorte à obtenir un empiècement,
- confectionner une coiffe comprenant ledit empiècement,
- disposer ladite coiffe dans un moule et remplir son volume intérieur avec un mélange précurseur de ladite mousse,
- après expansion de ladite mousse et surmoulage dudit empiècement par ladite mousse, démouler l'élément obtenu.

Selon une réalisation, le procédé comprend en outre l'étape de préparer un mélange précurseur d'enduction à base de polyuréthanne anionique aromatique en dispersion aqueuse, par exemple dans les proportions de 75 parts d'eau pour 25 parts de résine LAMPUR® 1270, l'eau étant éliminée dans une étape ultérieure par séchage à chaud, notamment vers 100°C, pour obtenir l'enduction. Le mélange précurseur d'enduction est notamment apte à être pulvérisé.

Un repassage peut ensuite être effectué par rouleau, avec une machine ROTOPRESS®, à une température de l'ordre de 90°C.

Selon une réalisation, le mélange précurseur d'enduction peut comprendre une fraction d'isopropanol, de sorte à permettre un meilleur accrochage de l'enduction sur le cuir. Un exemple de mélange est de 65 parts d'eau pour 25 parts de LAMPUR® 1270 et 10 parts d'isopropanol.

## Revendications

1. Elément de garnissage de véhicule automobile, ledit élément comprenant une coiffe, le volume intérieur de ladite coiffe étant rempli par un corps en mousse, ladite coiffe comprenant au moins un empiècement à base de cuir, ledit élément étant **caractérisé en ce que** ledit empiècement comprend une enduction d'envers présentant une affinité d'accrochage avec ladite mousse de sorte que ladite mousse surmoule ledit empiècement.

2. Elément selon la revendication 1, la mousse étant à base de polyuréthanne et l'enduction étant à base de polyuréthanne anionique aromatique.

3. Elément selon la revendication 2, le polyuréthane anionique aromatique étant à base de polyéther.

4. Procédé de réalisation d'un élément selon l'une quelconque des revendications 1 à 3, comprenant les étapes de :
• prévoir au moins un format de cuir,
• enduire l'envers dudit format avec une enduction d'envers présentant une affinité d'accrochage avec une mousse, de sorte à obtenir un empiècement,
• confectionner une coiffe comprenant ledit empiècement,
• disposer ladite coiffe dans un moule et remplir son volume intérieur avec un mélange précurseur de ladite mousse,
• après expansion de ladite mousse et surmoulage dudit empiècement par ladite mousse, démouler l'élément obtenu.

5. Procédé selon la revendication 4, comprenant en outre l'étape de préparer un mélange précurseur d'enduction à base de polyuréthanne anionique aromatique en dispersion aqueuse, l'eau étant éliminée dans une étape ultérieure par séchage à chaud pour obtenir l'enduction.

6. Procédé selon la revendication 5, le mélange précurseur d'enduction comprenant une fraction d'isopropanol.
